(19) Europäisches Patentamt

European Patent Office

Office européen des brevets

(11) **EP 2 951 649 B1**

(12) **EUROPEAN PATENT SPECIFICATION**

(45) Date of publication and mention
of the grant of the patent:
**11.09.2019 Bulletin 2019/37**

(51) Int Cl.:
***G02B 27/22*** *(2018.01)*     ***G04G 17/04*** *(2006.01)*
***G04G 9/08*** *(2006.01)*     ***G04G 9/02*** *(2006.01)*
***H04N 13/302*** *(2018.01)*

(21) Application number: **13873634.3**

(22) Date of filing: **31.01.2013**

(86) International application number:
**PCT/US2013/024093**

(87) International publication number:
**WO 2014/120194 (07.08.2014 Gazette 2014/32)**

(54) **MULTIVIEW 3D WRIST WATCH**

MEHRFACHANSICHTS-3D-ARMBANDUHR

MONTRE-BRACELET 3D MULTIVUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.12.2015 Bulletin 2015/50**

(73) Proprietor: **LEIA Inc.**
**Menlo Park, CA 94025 (US)**

(72) Inventors:
• **TAFF, Brian M.**
**Corvallis, OR 97330 (US)**
• **FATTAL, David A.**
**Menlo Park, CA 94025 (US)**

• **BEAUSOLEIL, Raymond G.**
**Palo Alto, CA 94304 (US)**

(74) Representative: **Carpmaels & Ransford LLP**
**One Southampton Row**
**London WC1B 5HA (GB)**

(56) References cited:
**WO-A1-99/08257     WO-A1-2008/152436**
**CN-A- 101 750 664     JP-A- H11 326 545**
**JP-A- 2007 033 200     JP-A- 2012 184 954**
**US-A- 5 184 848     US-A1- 2004 257 496**
**US-A1- 2007 236 801**

EP 2 951 649 B1

## Description

<u>CROSS-REFERENCE TO RELATED APPLICATIONS</u>

This application is related to PCT Patent Application Serial No. PCT/US2012/035573 (Attorney Docket No. 82963238), entitled "Directional Pixel for Use in a Display Screen", filed on April 27th, 2012, PCT Patent Application Serial No. PCT/US2012/040305 (Attorney Docket No. 83011348), entitled "Directional Backlight", filed on May 31st, 2012, PCT Patent Application Serial No. PCT/US2012/040607 (Attorney Docket No. 82963242), entitled "Directional Backlight with a Modulation Layer", filed on June 1st, 2012, and PCT Patent Application Serial No. PCT/US2012/058026 (Attorney Docket No. 82963246), entitled "Directional Waveguide-Based Backlight with Integrated Hybrid Lasers for Use in a Multiview Display Screen", filed on September 28th, 2012, and assigned to the assignee of the present application.

<u>BACKGROUND</u>

Wrist watches have been a part of human culture and attire for quite a few decades, having first become popular in the 1920s. The first few models were simply pocket watches held in place by a strap out of necessity during times of war. Soldiers found it impractical to pull a watch from their pockets in the middle of a battle and started relying on wrist watches more frequently. As wrist watches became popular, their designs improved and evolved over time. Initial designs were entirely mechanical. The next generation models employed electronic mechanisms with quartz oscillators. Digital watches became an item in the 1970s, and since then, various models have surfaced to increase consumer demand, including calculator watches, waterproof watches, camera watches, GPS watches, and so on. Current fashion trends indicate that wrist watches are experiencing a comeback after losing some ground to smart phones and other devices.
US 2004/0257496 A1 relates to a wristwatch capable of three-dimensional time view on a liquid crystal display element without a hologram.
WO 2008/152436 A1 relates to a device with an integrated backlight layer utilizing separate colour diffracting out-coupling.

<u>BRIEF DESCRIPTION OF THE DRAWINGS</u>

The present application may be more fully appreciated in connection with the following detailed description taken in conjunction with the accompanying drawings, in which like reference characters refer to like parts throughout, and in which:

FIG. 1 illustrates schematic diagrams of wrist watches designed in accordance with various examples;
FIG. 2 illustrates a schematic diagram of a wrist watch with a directional backplane in accordance with various examples;
FIGS. 3A-B illustrate example top views of a directional backplane according to FIG. 2;
FIGS. 4A-B illustrate other example top views of a directional backplane according to FIG. 2;
FIG. 5 illustrates an example directional backplane of FIG. 2 having a triangular shape;
FIG. 6 illustrates an example directional backplane of FIG. 2 having an hexagonal shape;
FIG. 7 illustrates an example directional backplane of FIG. 2 having a circular shape; and
FIG. 8 is a flowchart for generating a 3D time view with a multiview 3D wrist watch in accordance with the present application.

<u>DETAILED DESCRIPTION</u>

A multiview 3D wrist watch is disclosed. The multiview 3D wrist watch is capable of displaying time in 3D such that a user may view time as if floating in space. The wrist watch employs a unique directional backplane that is used to provide a light field in the form of directional lightbeams. The directional lightbeams are scattered by a plurality of directional pixels in the directional backplane. Each directional lightbeam originates from a different directional pixel and has a given direction and angular spread based on characteristics of the directional pixel. This pointed directionality enables directional beams to be modulated (i.e., turned on, off or changed in brightness) using a plurality of modulators and generate different 3D time views.
A first aspect of the present invention relates to a multiview 3D wristwatch as defined in claim 1.
A second aspect of the present invention relates to a method of generating a 3D timeview in a multiview 3D wristwatch as defined in claim 12.
Preferred embodiments of the present invention are defined in the dependent claims.
In the present invention, the directional pixels are arranged in a directional backplane that is illuminated by a plurality of input planar lightbeams. The directional pixels receive the input planar lightbeams and scatter a fraction of them into directional lightbeams. A shutter layer is placed above the directional pixels to modulate the directional lightbeams as desired The shutter layer may include a plurality of modulators with active matrix addressing (e.g., Liquid Crystal Display ("LCD") cells, MEMS, fluidic, magnetic, electrophoretic, etc.), with each modulator modulating a single directional lightbeam from a single directional pixel or a set of directional lightbeams from a set of directional pixels. The shutter layer enables 3D time views to be generated, with each view provided by a set of directional lightbeams. The 3D time views may be in a single color or multiple colors as desired.

In one aspect of the present invention, the directional pixels in the directional backplane have patterned gratings of substantially parallel grooves arranged in or on top of the directional backplane. The directional backplane may be, for example, a slab of transparent material that guides the input planar lightbeams into the directional pixels, such as, for example, Silicon Nitride ("SiN"), glass or quartz, plastic, Indium Tin Oxide ("ITO"), among others. The patterned gratings can consist of grooves etched directly in or made of material deposited on top of the directional backplane (e.g., any material that can be deposited and etched or lift-off, including any dielectrics or metal). The grooves may also be slanted.

As described in more detail herein below, each directional pixel may be specified by a grating length (i.e., dimension along the propagation axis of the input planar lightbeams), a grating width (i.e., dimension across the propagation axis of the input planar lightbeams), a groove orientation, a pitch, and a duty cycle. Each directional pixel may emit a directional lightbeam with a direction that is determined by the groove orientation and the grating pitch and with an angular spread that is determined by the grating length and width. By using a duty cycle of or around 50%, the second Fourier coefficient of the patterned gratings vanishes thereby preventing the scattering of light in additional unwanted directions. This insures that only one directional lightbeam emerges from each directional pixel regardless of its output angle.

As further described in more detail herein below, a directional backplane can be designed with directional pixels that have a certain grating length, a grating width, a groove orientation, a pitch and a duty cycle that are selected to produce a given 3D time view. The 3D time view is generated from the directional lightbeams emitted by the directional pixels and modulated by the shutter layer, with modulated directional lightbeams from a set of directional pixels generating a given time view.

It is appreciated that, in the following description, numerous specific details are set forth to provide a thorough understanding of the embodiments. However, it is appreciated that the embodiments may be practiced without limitation to these specific details. In other instances, well known methods and structures may not be described in detail to avoid unnecessarily obscuring the description of the embodiments. Also, the embodiments may be used in combination with each other.

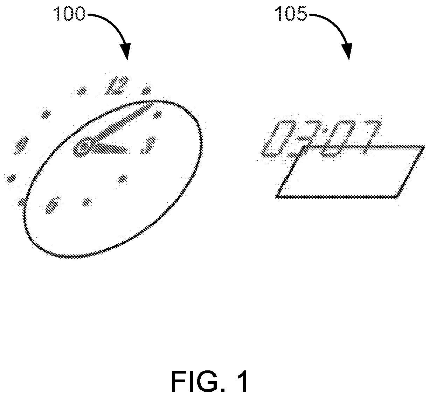

Referring now to FIG. 1, schematic diagrams of wrist watches designed in accordance with various examples is described. Wrist watch 100 is a multiview 3D watch that displays time in a circular-like display with numbers placed around the display. Wrist watch 105 is a multiview 3D watch that displays time in a rectangular-like display with number digits indicating the time. Both wrist watches 100-105 show time in 3D time views such that a user may see time as if floating in space. Depending on the position of the user's eyes, a different time view may be perceived by the user; that is, the user views time in a natural and real manner much like the brain perceives visual information in 3D in the real world.

It is appreciated that the time views shown in wrist watches 100 and 105 may be of a single or multiple colors as desired. It is also appreciated that the 3D time views may be of different shapes, have different effects, and include other imagery besides the time. For example, the 3D time views may be shaded, outlined, patterned, and so on. The wrist watch displays may be rectangular, circular, polygonal, or any other shape that may be designed for a wrist watch. The time views may also include a logo for the wrist watch, background pictures, and other pictures to complement the time displayed. As described below, the 3D time views are generated with a unique directional backplane capable of generating directional lightbeams that are modulated by a shutter layer according to the time to be displayed in the 3D time view (e.g., 8:13 am, 10:34 pm, etc.).

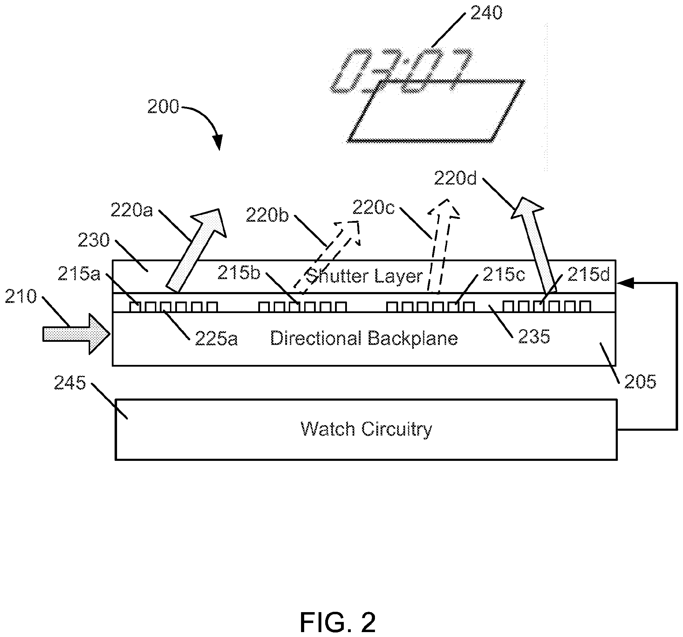

Referring now to FIG. 2, a schematic diagram of a wrist watch with a directional backplane in accordance with various examples is described Wrist watch 200 includes a directional backplane 205 that receives a set of input planar lightbeams 210 from a plurality of light sources. The plurality of light sources may include, for example, one or more narrow-bandwidth light sources with a spectral bandwidth of approximately 30 nm or less, such as Light Emitting Diodes ("LEDs"), lasers (e.g., hybrid lasers), or any other light source used to provide illumination in a wrist watch. The input planar lightbeams 210 propagate in substantially the same plane as the directional backplane 205, which is designed to be substantially planar.

The directional backplane 205 may consist of a slab of a transparent material (e.g., SiN, glass or quartz, plastic, ITO, etc.) having a plurality of directional pixels 215a-d arranged in or on top of the directional backplane 205. The directional pixels 215a-d scatter a fraction of the input planar lightbeams 210 into directional lightbeams 220a-d. In various examples, each directional pixel 215a-d has patterned gratings of substantially parallel grooves, e.g., grooves 225a for directional pixel 215a. The thickness of the grating grooves can be substantially the same for all grooves resulting in a substantially planar design. The grooves can be etched in the directional backplane or be made of material deposited on top of the directional backplane 205 (e.g., any material that can be deposited and etched or lift-off, including any dielectrics or metal).

Each directional lightbeam 220a-d has a given direction and an angular spread that is determined by the patterned grating forming the corresponding directional pixel 215a-d. In particular, the direction of each directional lightbeam 220a-d is determined by the orientation and the grating pitch of the patterned gratings. The angular spread of each directional lightbeam is in turn determined by the grating length and width of the patterned gratings. For example, the direction of directional lightbeam 215a is determined by the orientation and the grating pitch of patterned gratings 225a.

It is appreciated that this substantially planar design and the formation of directional lightbeams 220a-d from input planar lightbeams 210 requires gratings having a substantially smaller pitch than traditional diffraction gratings. For example, traditional diffraction gratings scatter light upon illumination with lightbeams that are propagating substantially across the plane of the grating. Here, the gratings in each directional pixel 215a-d are substantially on the same plane as the input planar lightbeams 210 when generating the directional lightbeams 220a-d.

The directional lightbeams 220a-d are precisely controlled by characteristics of the gratings in directional pixels 215a-d including a grating length $L$, a grating width $W$, a groove orientation $\theta$, and a grating pitch A. In particular, the grating length $L$ of grating 225a controls the angular spread $\Delta\Theta$ of the directional lightbeam 220a along the input light propagation axis and the grating width $W$ controls the angular spread $\Delta\Theta$ of the directional lightbeam 220a across the input light propagation axis, as follows:

$$\Delta\Theta \approx \frac{4\lambda}{\pi L}\left(\frac{4\lambda}{\pi W}\right) \hspace{3cm} (\text{Eq. 1})$$

where $\lambda$ is the wavelength of the directional lightbeam 220a. The groove orientation, specified by the grating orientation angle $\theta$, and the grating pitch or period, specified by A, control the direction of the directional lightbeam 220a.

The grating length $L$ and the grating width $W$ can vary in size in the range of 0.1 to 200 $\mu$m. The groove orientation angle $\theta$ and the grating pitch A may be set to satisfy a desired direction of the directional lightbeam 220a, with, for example, the groove orientation angle $\theta$ on the order of -40 to +40 degrees and the grating pitch A on the order of 200-700 nm.

In various examples, a shutter layer 230 (e.g., LCD cells) is positioned above the directional pixels 215a-d to modulate the directional lightbeams 220a-d scattered by the directional pixels 215a-d. Modulation of directional lightbeams 220a-d involves controlling their brightness with the shutter layer 230 (e.g., turning them on, off, or changing their brightness). For example, modulators in the shutter layer 230 may be used to turn on directional lightbeams 220a and 220d and turn off directional lightbeams 220b and 220c.

The ability to provide modulation for the directional lightbeams 220a-d enables many different 3D time views to be generated, such as time view 240. The modulators are controlled by clock circuitry 245, which determines the time to be displayed in the wrist watch 200 and therefore determines which directional lightbeams 220a-d to be turned on or off to produce the time view 240 corresponding to the time to be displayed in the watch 200 (e.g., 03:07 am).

The shutter layer 230 may be placed on top of a spacer layer 235, which may be made of a material or simply consist of a spacing (i.e., air) between the directional pixels 215a-d and the modulators the shutter layer 230. The spacer layer 235 may have a width, for example, on the order of 0-100 $\mu$m.

It is appreciated that directional backplane 205 is shown with four directional pixels 215a-d for illustration purposes only. A directional backplane in accordance with various examples can be designed with many directional pixels (e.g., higher than 100), depending on how the directional backplane is used (e.g., in a 3D display screen, in a 3D watch, in a mobile device, etc.). It is also appreciated that the directional pixels may have any shape, including for example, a circle, an ellipse, a polygon, or other geometrical shape.

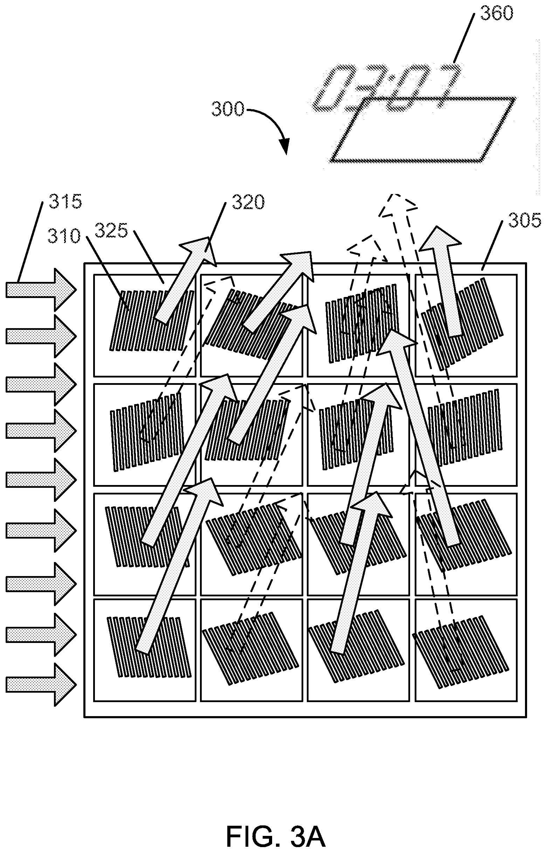

Attention is now directed to FIGS. 3A-B, which illustrate top views of a directional backplane according to FIG. 2. In FIG. 3A, wrist watch 300 is shown with a directional backplane 305 consisting of a plurality of polygonal directional pixels (e.g., directional pixel 310) arranged in a transparent slab. Each directional pixel is able to scatter a portion of the input planar lightbeams 315 into an output directional lightbeam (e.g., directional lightbeam 320). Each directional lightbeam is modulated by a modulator, e.g., LCD cell 325 for directional lightbeam 320. The directional lightbeams scattered by all the directional pixels in the directional backplane 305 and modulated by the modulators (e.g., LCD cell 325) can represent multiple image views that when combined form a 3D time view 360.

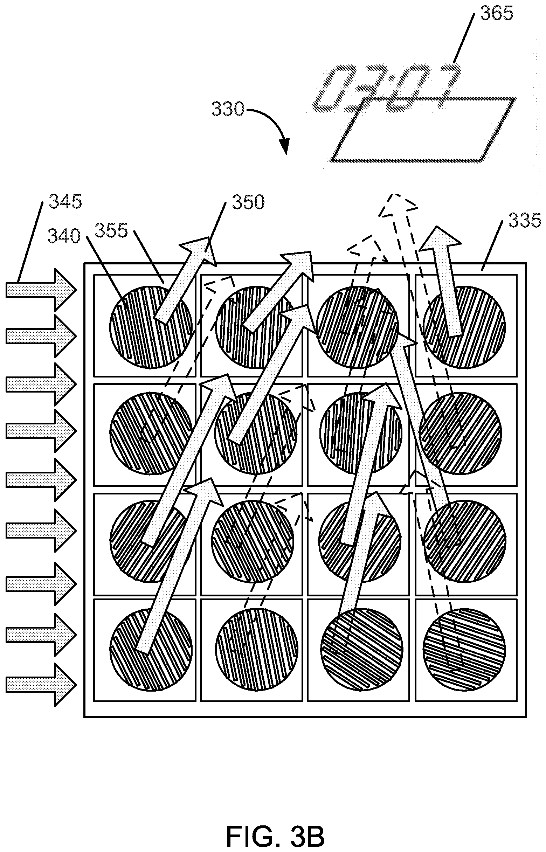

Similarly, in FIG. 3B, wrist watch 330 is shown with a directional backplane 335 consisting of a plurality of circular directional pixels (e.g., directional pixel 340) arranged in a transparent slab. Each directional pixel is able to scatter a portion of the input planar lightbeams 345 into an output directional lightbeam (e.g., directional lightbeam 350). Each directional lightbeam is modulated by a modulator, e.g., LCD cell 355 for directional lightbeam 350. The directional lightbeams scattered by all the directional pixels in the directional backplane 335 and modulated by the modulators (e.g.,

LCD cell 355) can represent multiple image views that when combined form a 3D time view 365.

In various examples, a single modulator may be used to modulate a set of directional lightbeams from a set of directional pixels. That is, a given modulator may be placed above a set of directional pixels instead of having a single modulator per directional pixel as shown in FIGS. 3A-B.

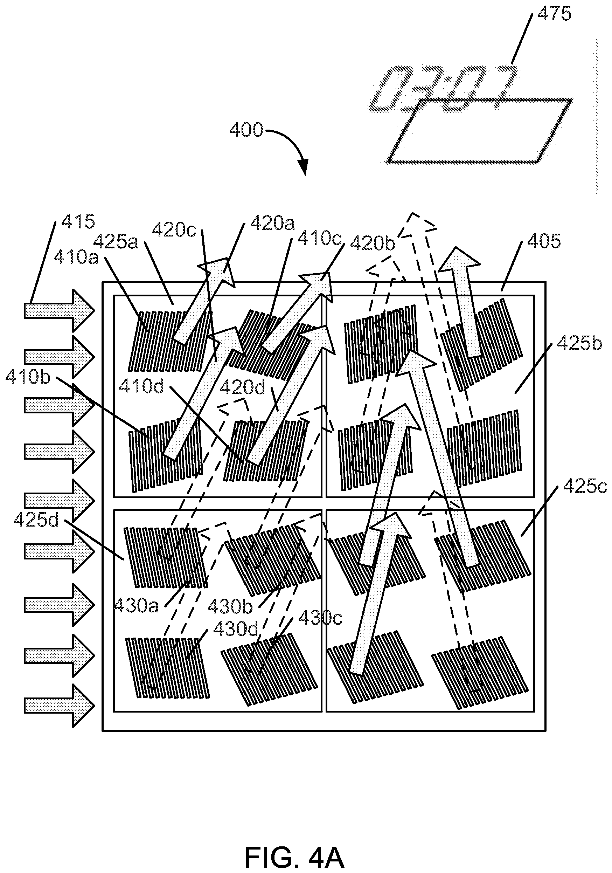

Referring now to FIGS. 4A-B, top views of a directional backplane according to FIG. 2 are described. In FIG. 4A, wrist watch 400 is show with a directional backplane 405 consisting of a plurality of polygonal directional pixels (e.g., directional pixel 410a) arranged in a transparent slab. Each directional pixel is able to scatter a portion of the input planar lightbeams 415 into an output directional lightbeam (e.g., directional lightbeam 420a). A set of directional lightbeams (e.g., directional lightbeams 420a-d scattered by directional pixels 410a-d) is modulated by a modulator (e.g., LCD cell 425a to modulate directional lightbeams 420a-d). For example, LCD cell 425a is used to turn on directional pixels 410a-d while LCD cell 425d is used to turn off directional pixels 430a-d. The directional lightbeams scattered by all the directional pixels in the directional backplane 405 and modulated by the LCD cells 425a-d can represent multiple views that when combined form a 3D time view 475.

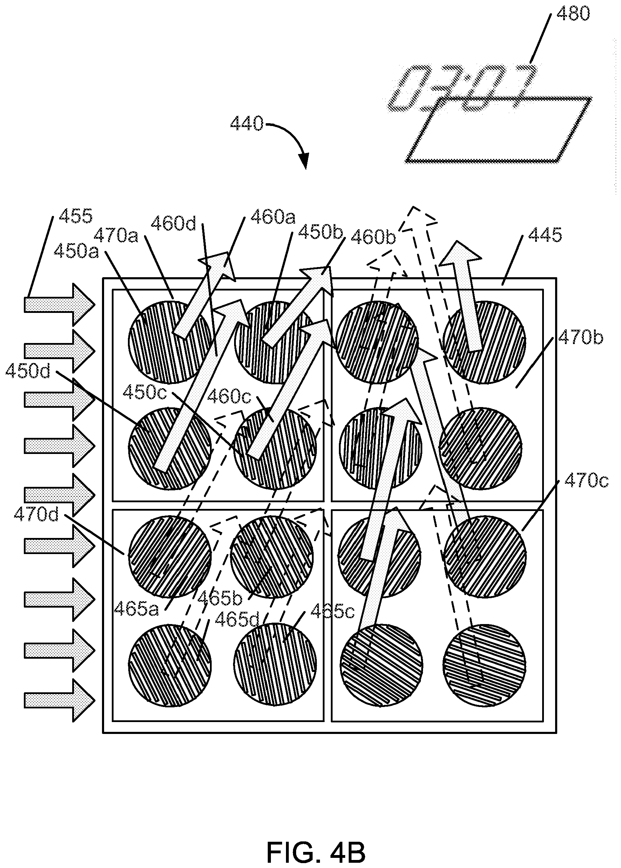

Similarly, in FIG. 4B, wrist watch 440 is show with a directional backplane 445 consisting of a plurality of circular directional pixels (e.g., directional pixel 450a) arranged in a transparent slab. Each directional pixel is able to scatter a portion of the input planar lightbeams 455 into an output directional lightbeam (e.g., directional lightbeam 360a). A set of directional lightbeams (e.g., directional lightbeams 460a-d scattered by directional pixels 450a-d) is modulated by a modulator (e.g., LCD cell 470a to modulate directional lightbeams 460a-d). For example, LCD cell 470a is used to turn on directional pixels 450a-d while LCD cell 470d is used to turn off directional pixels 465a-d. The directional lightbeams scattered by all the directional pixels in the directional backplane 445 and modulated by modulators such as the LCD cells 470a-d can represent multiple views that when combined form a 3D time view 480.

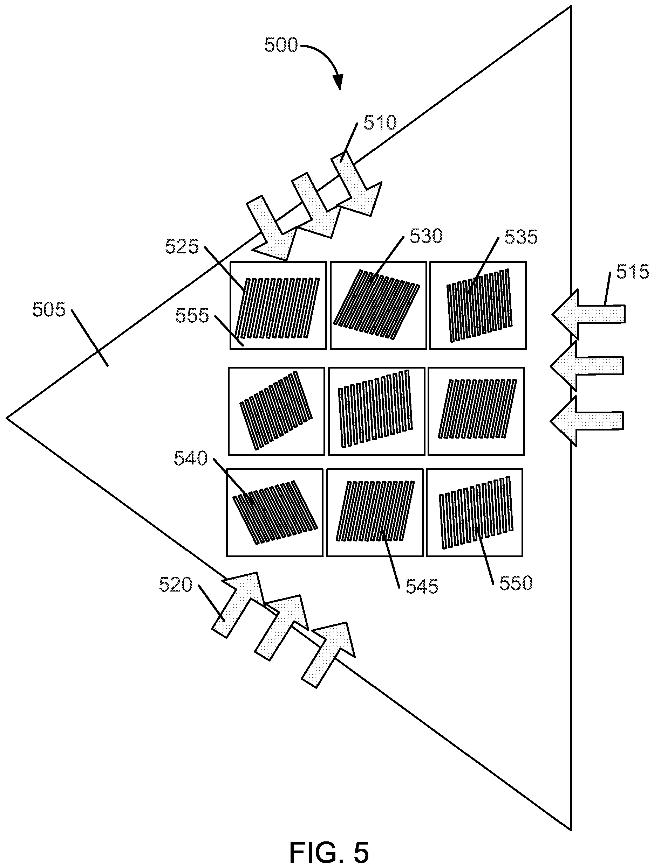

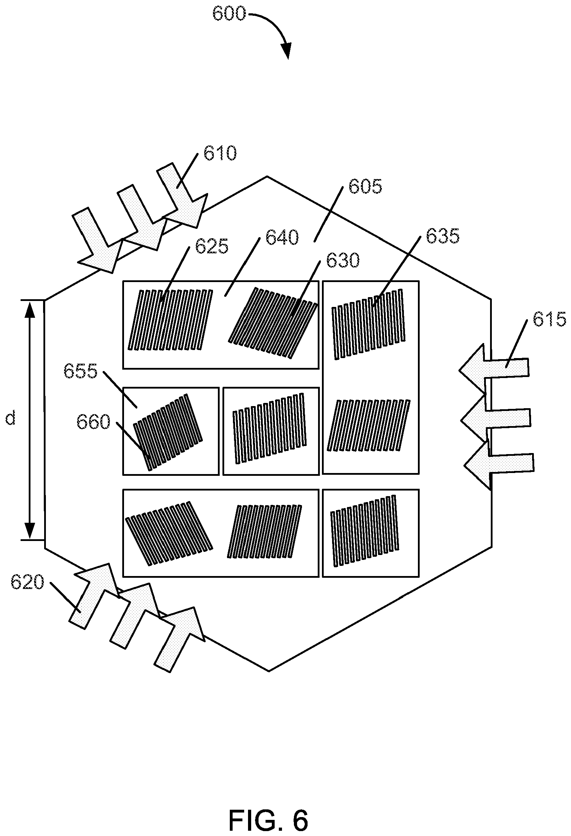

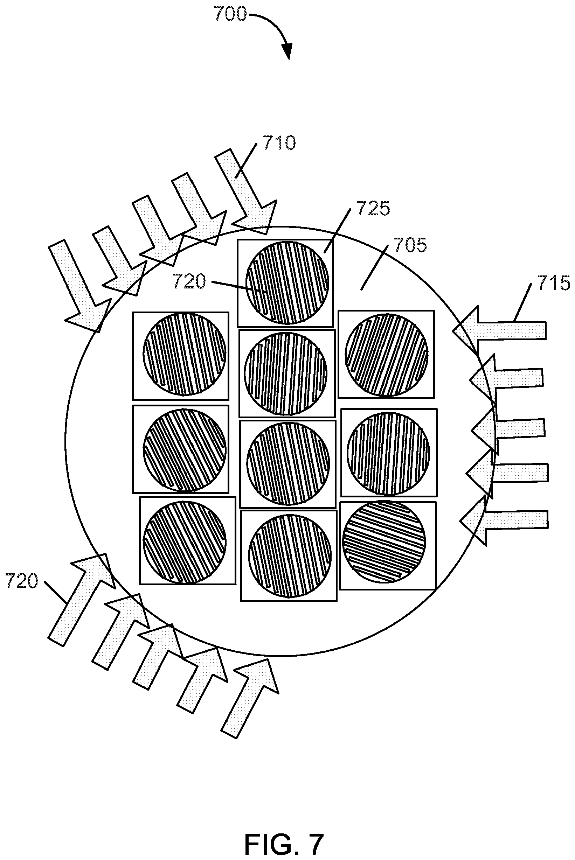

It is appreciated that a directional backplane may be designed to have different shapes, such as, for example, a triangular shape (as shown in FIG. 5), a hexagonal shape (as shown in FIG. 6), or a circular shape (as shown in FIG. 7). In FIG. 5, the directional backplane 505 receives input planar lightbeams from three different spatial directions, e.g., input planar lightbeams 510-520. This configuration may be used when the input planar lightbeams represent light of different colors, e.g., with input planar lightbeams 510 representing a red color, input planar lightbeams 515 representing a green color, and input planar lightbeams 520 representing a blue color. Each of the input planar lightbeams 510-520 is disposed on a side of the triangular directional backplane 505 to focus their light on a set of directional pixels. For example, the input planar lightbeams 510 is scattered into directional lightbeams by a set of directional pixels 525-535. This subset of directional pixels 525-535 may also receive light from the input planar lightbeams 515-520. However, by design this light is not scattered in the intended view zone of the wrist watch 500.

For example, suppose that input planar lightbeams 510 are scattered by a subset $G_A$ of directional pixels 525-535 into an intended view zone. The intended view zone may be specified by a maximum ray angle $\theta_{max}$ measured from a normal to the directional backplane 504. Input planar lightbeams 510 may also be scattered by a subset of directional pixels $G_B$ 540-550, however those unwanted rays are outside the intended view zone as long as:

$$\sin \theta_{max} \leq \frac{\lambda_A + \lambda_B}{\lambda_A \lambda_B} \sqrt{\left(\frac{n_{eff}^A}{\lambda_A}\right)^2 + \left(\frac{n_{eff}^B}{\lambda_B}\right)^2 - \left(\frac{n_{eff}^A}{\lambda_A}\right)\left(\frac{n_{eff}^B}{\lambda_B}\right)} \qquad \text{(Eq. 2)}$$

where $\lambda_A$ is the wavelength of input planar lightbeams 510, $n_{eff}^A$ is the effective index of horizontal propagation of input planar lightbeams 510 in the directional backplane 505, $\lambda_B$ is the wavelength of input planar lightbeams 520 (to be scattered by directional pixels 540-550), and $n_{eff}^B$ is the effective index of horizontal propagation of input planar lightbeams 520 in the directional backplane 505. In case where the effective indices and wavelengths are substantially the same, Equation 2 reduces to:

$$\sin \theta_{max} \leq \frac{n_{eff}}{2} \qquad \text{(Eq. 3)}$$

For a directional backplane of refractive index n above 2 with input planar lightbeams propagating near the grazing angle, it is seen that the intended view zone of the display can be extended to the whole space ($n_{eff} \geq 2$ and $\sin\theta_{max}\sim1$). For a directional backplane of lower index such as glass (e.g., n = 1.46), the intended view zone is limited to about $\theta_{max}$ < arcsin(n/2) (±45° for glass).

It is appreciated that each directional lightbeam may be modulated by a modulator, such as, for example, LCD cell 555. Since precise directional and angular control of directional lightbeams can be achieved with each directional pixel in the directional backplane 505 and the directional lightbeams can be modulated by modulators such as LCD cells, the directional backplane 405 can be designed to generate many different views of 3D images.

It is further appreciated that the directional backplane 505 shown in FIG. 5 may be shaped into a more compact design by realizing that the extremities of the triangular slab can be cut to form a hexagonal shape, as shown in FIG. 6. The directional backplane 605 receives input planar lightbeams from three different spatial directions, e.g., input planar lightbeams 610-620. Each of the input planar lightbeams 610-620 is disposed on alternating sides of the hexagonal directional backplane 605 to focus its light on a subset of directional pixels (e.g., directional pixels 625-635). In various examples, the hexagonal directional backplane 605 has a side length that may range in the order of 10-30 mm, with a directional pixel size in the order of 10-30 μm.

It is appreciated that wrist watch 600 is shown with multiple configurations of modulators. For example, a single modulator may be used to modulate directional lightbeams from a set of directional pixels, e.g., LCD cell 640 for directional pixels 625-635, or a single modulator may be used to modulate a single directional pixel, e.g., LCD cell 655 for directional pixel 660. One skilled in the art appreciates that any configuration of modulators for use with directional pixels may be used to modulate directional lightbeams scattered by the directional pixels. A clock circuitry (not shown) is used to control the modulators in a shutter layer. One skilled in the art also appreciates that any shutter layer configuration may be used to modulate directional lightbeams.

It is also appreciated that the directional backplane for use with color input planar lightbeams can have any geometrical shape besides a triangular (FIG. 5) or hexagonal shape (FIG. 6) as long as light from three primary colors is brought from three different directions. For example, the directional backplane may be a polygon, a circle, an ellipse, or another shape able to receive light from three different directions. Referring now to FIG. 7, a directional backplane having a circular shape is described. Directional backplane 705 in wrist watch 700 receives input planar lightbeams 710-720 from three different directions. Each directional pixel has a circular shape, e.g., directional pixel 720, and scatters a directional lightbeam that is modulated by a modulator, e.g., LCD cell 725. Each LCD cell has a rectangular shape and the circular directional backplane 705 is designed to accommodate the rectangular LCD cells for the circular directional pixels (or for polygonal directional pixels if desired).

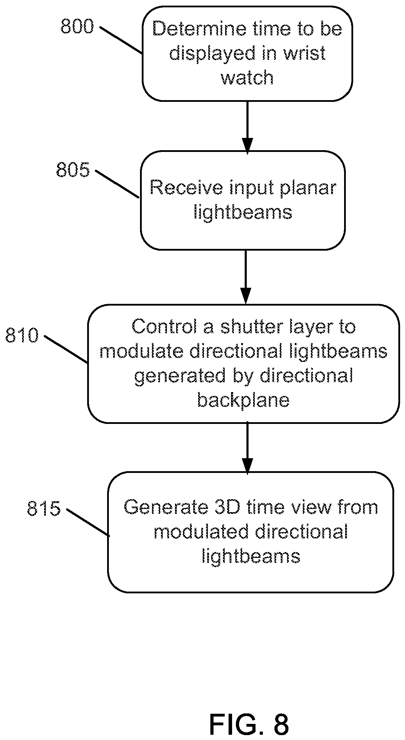

A flowchart for generating a 3D time view with a multiview 3D wrist watch in accordance with the present application is illustrated in FIG. 8. The multiview 3D wrist watch generates 3D time views with a directional backplane and a shutter layer controller by clock circuitry as described above. First, clock circuitry determines a time to be displayed (800). Light from a plurality of narrow-bandwidth light sources is input into the directional backplane in the form of input planar lightbeams (805). The clock circuitry then controls a shutter layer to modulate a set of directional pixels in a directional backplane according to the time to be displayed (810). Lastly, a 3D time view is generated from the modulated directional lightbeams that are scattered by the directional pixels in the directional backplane (815).

Advantageously, the multiview 3D wrist watch enables a 3D time view to be generated so that a user views time as if floating in space. The directional lightbeams generated by the directional pixels can be modulated to produce any desired effect in the generated time views.

It is appreciated that the previous description of the disclosed embodiments is provided to enable any person skilled in the art to make or use the present disclosure. Various modifications to these embodiments will be readily apparent to those skilled in the art, and the generic principles defined herein may be applied to other embodiments without departing from the spirit or scope of the disclosure.

The scope of the invention is defined by the appended claims.

**Claims**

1. A multiview 3D wrist watch (100;105;200;330;400;440) comprising:

    clock circuitry (245) to determine a time;
    a plurality of light sources to generate a plurality of input planar lightbeams (210);
    a directional backplane (205) having a plurality of directional pixels (215a-215d) to scatter the plurality of input planar lightbeams into a plurality of directional lightbeams (220a-220d), wherein each directional pixel in the plurality of directional pixels comprises patterned gratings with a plurality of parallel grooves (225a), each directional lightbeam having a direction and angular spread controlled by characteristics of a directional pixel in the plurality of directional pixels, wherein the characteristics of a directional pixel comprise a grating length, a grating width, a grating orientation, a grating pitch, and a duty cycle and wherein the directional lightbeams represent multiple image views; and
    a shutter layer (230) to receive the time from the clock circuitry and modulate the plurality of directional lightbeams to generate a 3D time view (240).

2. The multiview 3D wrist watch of claim 1, further comprising a spacer layer (235) positioned above the directional backplane (205).

3. The multiview 3D wrist watch of claim 2, wherein the shutter layer (230) is positioned above the spacer layer (235).

4. The multiview 3D wrist watch of claim 1, wherein the directional backplane (205) is planar.

5. The multiview 3D wrist watch of claim 1, wherein the pitch and orientation of a directional pixel control the direction of a directional lightbeam scattered by the directional pixel.

6. The multiview 3D wrist watch of claim 1, wherein the length and width of a directional pixel control the angular spread of a directional lightbeam scattered by a directional pixel.

7. The multiview 3D wrist watch of claim 1, wherein the shutter layer (230) comprises a plurality of modulators.

8. The multiview 3D wrist watch of claim 1, wherein the directional backplane (205) comprises a polygonal slab of transparent material.

9. The multiview 3D wrist watch of claim 1, wherein the directional backplane (205) comprises a circular slab of transparent material.

10. The multiview 3D wrist watch of claim 1, wherein the plurality of directional pixels (215a-215d) comprises a plurality of polygonal directional pixels.

11. The multiview 3D wrist watch of claim 1, wherein the plurality of directional pixels (215a-215d) comprises a plurality of circular directional pixels.

12. A method of generating a 3D time view (40) in a multiview 3D wrist watch (100;105;200;330;400;440), the method comprising:

determining a time to be display by the wrist watch;
illuminating a directional backplane (205) using a plurality of input planar lightbeams (210) from a plurality of light sources in the wrist watch;
receiving the input planar lightbeams (210) in a plurality of directional pixels (215a-215d) arranged in the directional backplane (205) and scattering a fraction of the input lightbeams (210) to generate a plurality of directional lightbeams (220a-220d) wherein the directional lightbeams represent multiple image views;
modulating the plurality of directional lightbeams using a shutter layer (230) controlled according to the determined time to provide a 3D time view (40) of the determined time using the modulated directional lightbeams.

13. The method of claim 12, wherein each directional lightbeam (220a-220d) has a direction and an angular spread controlled by characteristics of a patterned grating of a directional pixel in a plurality of directional pixels in the directional backplane.

**Patentansprüche**

1. Mehrfachansicht-3D-Armbanduhr (100; 105; 200; 330; 400; 440) umfassend:

Uhrenschaltung (245) zum Bestimmen einer Zeit;
mehrere Lichtquellen, um mehrere planare Eingangslichtstrahlen (210) zu erzeugen;
eine gerichtete Backplane (205) mit mehreren gerichteten Pixeln (215a-215d), um die mehreren planaren Eingangslichtstrahlen in mehrere gerichtete Lichtstrahlen (220a-220d) zu streuen, wobei jedes gerichtete Pixel in den mehreren gerichteten Pixeln strukturierte Gitter mit mehreren parallelen Nuten (225a) umfasst,
jeder gerichtete Lichtstrahl mit einer Richtung und einer Winkelausbreitung, die durch die Eigenschaften eines gerichteten Pixels in den mehreren gerichteten Pixeln gesteuert werden, wobei die Eigenschaften eines gerichteten Pixels eine Gitterlänge, eine Gitterbreite, eine Gitterorientierung, eine Gitterneigung und ein Tastverhältnis umfassen und wobei die gerichteten Lichtstrahlen mehrere Bildansichten repräsentieren; und
eine Verschlussschicht (230) zum Empfangen der Zeit von der Uhrschaltung und zum Modulieren der mehreren gerichteten Lichtstrahlen zum Erzeugen einer 3D-Zeitansicht (240).

**2.** Mehrfachansicht-3D-Armbanduhr nach Anspruch 1, ferner umfassend eine Distanzschicht (235), die über der gerichteten Backplane (205) angeordnet ist.

**3.** Mehrfachansicht-3D-Armbanduhr nach Anspruch 2, wobei die Verschlussschicht (230) über der Distanzschicht (235) positioniert ist.

**4.** Mehrfachansicht-3D-Armbanduhr nach Anspruch 1, wobei die gerichtete Backplane (205) planar ist.

**5.** Mehrfachansicht-3D-Armbanduhr nach Anspruch 1, wobei die Neigung und Orientierung eines gerichteten Pixels die Richtung eines gerichteten Lichtstrahls steuert, der durch das gerichtete Pixel gestreut wird.

**6.** Mehrfachansicht-3D-Armbanduhr nach Anspruch 1, wobei die Länge und Breite eines gerichteten Pixels die Winkelausbreitung eines gerichteten Lichtstrahls steuern, der durch ein gerichtetes Pixel gestreut wird.

**7.** Mehrfachansicht-3D-Armbanduhr nach Anspruch 1, wobei die Verschlussschicht (230) mehrere Modulatoren umfasst.

**8.** Mehrfachansicht-3D-Armbanduhr nach Anspruch 1, wobei die gerichtete Backplane (205) eine polygonale Platte aus transparentem Material umfasst.

**9.** Mehrfachansicht-3D-Armbanduhr nach Anspruch 1, wobei die gerichtete Backplane (205) eine kreisförmige Platte aus transparentem Material umfasst.

**10.** Mehrfachansicht-3D-Armbanduhr nach Anspruch 1, wobei die mehreren gerichteten Pixel (215a-215d) mehrere polygonale gerichtete Pixel umfassen.

**11.** Mehrfachansicht-3D-Armbanduhr nach Anspruch 1, wobei die mehreren gerichteten Pixel (215a-215d) mehrere kreisförmige gerichtete Pixel umfassen.

**12.** Verfahren zum Erzeugen einer 3D-Zeitansicht (40) in einer Mehrfachansicht-3D-Armbanduhr mit mehreren Ansichten (100; 105; 200; 330; 400; 440), wobei das Verfahren umfasst:

Bestimmen einer Zeit, die von der Armbanduhr angezeigt werden soll;
Beleuchten einer gerichteten Backplane (205) unter Verwendung mehrerer planarer Eingangslichtstrahlen (210) aus mehreren Lichtquellen in der Armbanduhr;
Empfangen der planaren Eingangslichtstrahlen (210) in mehreren gerichteten Pixeln (215a-215d), die in der gerichteten Backplane (205) angeordnet sind und einen Bruchteil der Eingangslichtstrahlen (210) streuen, um mehrere gerichtete Lichtstrahlen (220a-220d) zu erzeugen, wobei die gerichteten Lichtstrahlen mehrere Bildansichten repräsentieren;
Modulieren der mehreren gerichteten Lichtstrahlen unter Verwendung einer Verschlussschicht (230), die gemäß der bestimmten Zeit gesteuert wird, um eine 3D-Zeitansicht (40) der bestimmten Zeit unter Verwendung der modulierten gerichteten Lichtstrahlen bereitzustellen.

**13.** Verfahren nach Anspruch 12, wobei jeder gerichtete Lichtstrahl (220a-220d) eine Richtung und eine Winkelausbreitung aufweist, die durch Eigenschaften eines strukturierten Gitters eines gerichteten Pixels in mehreren gerichteten Pixeln in der gerichteten Backplane gesteuert wird.

**Revendications**

**1.** Montre-bracelet 3D à vues multiples (100 ; 105 ; 200 ; 330 ; 400 ; 440) comprenant :

un ensemble de circuits d'horloge (245) pour déterminer l'heure ;
une pluralité de sources de lumière pour générer une pluralité de faisceaux lumineux plans d'entrée (210) ;
un fond de panier directionnel (205) ayant une pluralité de pixels directionnels (215a à 215d) pour disperser la pluralité de faisceaux lumineux plans d'entrée en une pluralité de faisceaux lumineux directionnels (220a à 220d), dans laquelle chaque pixel directionnel dans la pluralité de pixels directionnels comprend des réseaux à motifs ayant une pluralité de rainures parallèles (225a), chaque faisceau lumineux directionnel ayant une direction et un étalement angulaire commandés par des caractéristiques d'un pixel directionnel de la pluralité de pixels directionnels, dans laquelle les caractéristiques d'un pixel directionnel comprennent une longueur de réseau, une largeur de réseau, une orientation de réseau, un pas de réseau et un cycle de service et dans laquelle les faisceaux lumineux directionnels représentent de multiples vues d'image ; et
une couche d'obturateur (230) pour recevoir l'heure en provenance de l'ensemble de circuits d'horloge et pour moduler la pluralité de faisceaux lumineux directionnels afin de générer une vue de l'heure en 3D (240).

2. Montre-bracelet 3D à vues multiples selon la revendication 1, comprenant en outre une couche d'espacement (235) positionnée au-dessus du fond de panier directionnel (205).

3. Montre-bracelet 3D à vues multiples selon la revendication 2, dans laquelle la couche d'obturateur (230) est positionnée au-dessus de la couche d'espacement (235) .

4. Montre-bracelet 3D à vues multiples selon la revendication 1, dans laquelle le fond de panier directionnel (205) est plan.

5. Montre-bracelet 3D à vues multiples selon la revendication 1, dans laquelle le pas et l'orientation d'un pixel directionnel commandent la direction d'un faisceau lumineux directionnel dispersé par le pixel directionnel.

6. Montre-bracelet 3D à vues multiples selon la revendication 1, dans laquelle la longueur et la largeur d'un pixel directionnel commandent l'étalement angulaire d'un faisceau lumineux directionnel dispersé par le pixel directionnel.

7. Montre-bracelet 3D à vues multiples selon la revendication 1, dans laquelle la couche d'obturateur (230) comprend une pluralité de modulateurs.

8. Montre-bracelet 3D à vues multiples selon la revendication 1, dans laquelle le fond de panier directionnel (205) comprend une plaque polygonale constituée d'un matériau transparent.

9. Montre-bracelet 3D à vues multiples selon la revendication 1, dans laquelle le fond de panier directionnel (205) comprend une plaque circulaire constituée d'un matériau transparent.

10. Montre-bracelet 3D à vues multiples selon la revendication 1, dans laquelle la pluralité de pixels directionnels (215a à 215d) comprend une pluralité de pixels directionnels polygonaux.

11. Montre-bracelet 3D à vues multiples selon la revendication 1, dans laquelle la pluralité de pixels directionnels (215a à 215d) comprend une pluralité de pixels directionnels circulaires.

12. Procédé de génération d'une vue de l'heure en 3D (40) dans une montre-bracelet 3D à vues multiples (100 ; 105 ; 200 ; 330 ; 400 ; 440), le procédé consistant :

à déterminer l'heure à afficher par la montre-bracelet ;
à éclairer un fond de panier directionnel (205) à l'aide d'une pluralité de faisceaux lumineux plans d'entrée (210) à partir d'une pluralité de sources de lumière dans la montre-bracelet ;
à recevoir les faisceaux lumineux plans d'entrée (210) dans une pluralité de pixels directionnels (215a à 215d) disposés dans le fond de panier directionnel (205) et à disperser une fraction des faisceaux lumineux d'entrée (210) pour générer une pluralité de faisceaux lumineux directionnels (220a à 220d),
dans lequel les faisceaux lumineux directionnels représentent de multiples vues d'image ;
à moduler la pluralité de faisceaux lumineux directionnels à l'aide d'une couche d'obturateur (230) commandée en fonction de l'heure déterminée pour fournir une vue de l'heure en 3D (40) de l'heure déterminée à l'aide des faisceaux lumineux directionnels modulés.

13. Procédé selon la revendication 12, dans lequel chaque faisceau lumineux directionnel (220a à 220d) présente une direction et un étalement angulaire commandés par des caractéristiques d'un réseau à motifs d'un pixel directionnel d'une pluralité de pixels directionnels dans le fond de panier directionnel.

FIG. 1

FIG. 2

FIG. 3A

FIG. 3B

FIG. 4A

FIG. 4B

FIG. 5

FIG. 6

FIG. 7

800 — Determine time to be displayed in wrist watch

805 — Receive input planar lightbeams

810 — Control a shutter layer to modulate directional lightbeams generated by directional backplane

815 — Generate 3D time view from modulated directional lightbeams

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012035573 W
- US 2012040305 W
- US 2012040607 W
- US 2012058026 W
- US 20040257496 A1
- WO 2008152436 A1